# EUROPÄISCHE PATENTSCHRIFT

(11) **EP 0 482 219 B1**
(45) Veröffentlichungstag und Bekanntmachung des Hinweises auf die Patenterteilung: **08.06.1994**
(21) Anmeldenummer: 90118346.7
(22) Anmeldetag: 24.09.1990
(51) Int. Cl.: B60H 1/00

(54) **Bedieneinheit zum Einstellen von Heizungs-Klima- und/oder Lüftungsanlagen in Kraftfahrzeugen**
Control unit for adjusting the apparatus for heating air conditioning and/or ventilation in motor vehicles
Unité de commande pour le réglage des installations de chauffage, de conditionnement d'air et/ou de ventilation des véhicules automobiles

(43) Veröffentlichungstag der Anmeldung: 29.04.1992
(73) Patentinhaber: SIEMENS AKTIENGESELLSCHAFT, 80333 München (DE)
(72) Erfinder: Hentschel, Joachim, Dipl.-Ing. (FH), D-8630 Coburg (DE); Waldmann, Bernd, Ing.-grad. (FH), D-8640 Kronach (DE)

(56) Entgegenhaltungen:
- DE-A- 3 434 302
- FR-A- 2 080 132
- US-A- 2 861 466
- US-A- 4 924 724

## Beschreibung

Die Erfindung bezieht sich auf eine Bedieneinheit zum Einstellen von Heizungs-, Klima und/oder Lüftungsanlagen in Kraftfahrzeugen gemäß Oberbegriff des Anspruchs 1; eine derartige Bedieneinheit ist aus der DE-A-34 34 302 bekannt.

Bei der bekannten vorgenannten Bedieneinheit sind die von dem antriebsseitigen Kegelrad mitgenommenen Stellhebel jeweils in einem Drehlager im Grundkörper um einen begrenzten Winkelbereich schwenkbar und stehen mit dem Kegelrad dadurch in Mitnahmeverbindung, daß sie mit angeformten Mitnahmezapfen in Führungsnuten des Kegelrades eingreifen.

Durch die FR-A-2 080 132, insbesondere FIG 5;6 ist eine Bedieneinheit zum Einstellen von Klimaanlagen bekannt, bei der zwei Bowdenzüge senkrecht zur Achse eines einstellenden Drehknopfes dadurch parallel und synchron zueinander verstellt werden, daß ihre einen Enden an Zapfen von Gelenkhebeln befestigt sind, deren eine Enden drehpunktartig mit dem Drehknopf verbunden und deren andere, bowdenzugseitigen Enden parallel in Langlöchern einer Grundplatte der Bedieneinheit geführt sind.

Eine demgegenüber einfachere und mit geringerer Reibung, insbesondere bei parallel zur Drehachse des Drehknopfes abgehenden Bowdenzügen behaftete, auf einfache Weise auch mit nichtlinearer Verstellcharakteristik betätigbare Verstellung der Bowdenzüge durch einen Drehknopf kann erfindungsgemäß bei einer Bedieneinheit der eingangs genannten Art durch die Lehre des Anspruchs 1 erreicht werden; vorteilhafte Ausgestaltungen der Erfindung sind jeweils Gegenstand der Unteransprüche.

Zweckmäßigerweise liegen bei zwei an einen Drehknopf angekoppelten Stellhebeln die Mitnahmezapfen und damit auch die Stellhebel an einander gegenüberliegenden Seiten des abtriebsseitigen Kegelrades und die im bezug auf den Grundkörper ortsfesten Langlöcher in einer Grundplatte senkrecht zur Scheibenebene des antriebsseitigen Kegelrades und in der Scheibenebene des abtriebsseitigen Kegelrades.

Die Erfindung sowie weitere vorteilhafte Ausgestaltungen der Erfindung gemäß Merkmalen der Unteransprüche werden im folgenden anhand eines schematisch dargestellten Ausführungsbeispieles in der Zeichnung näher erläutert. Darin zeigen:
- FIG 1: die Draufsicht auf die Oberseite der Grundplatte eines mehrere Drehknöpfe aufnehmenden Grundkörpers einer Bedieneinheit,
- FIG 2: die Draufsicht auf die Unterseite der Grundplatte der Bedieneinheit gemäß FIG 1.

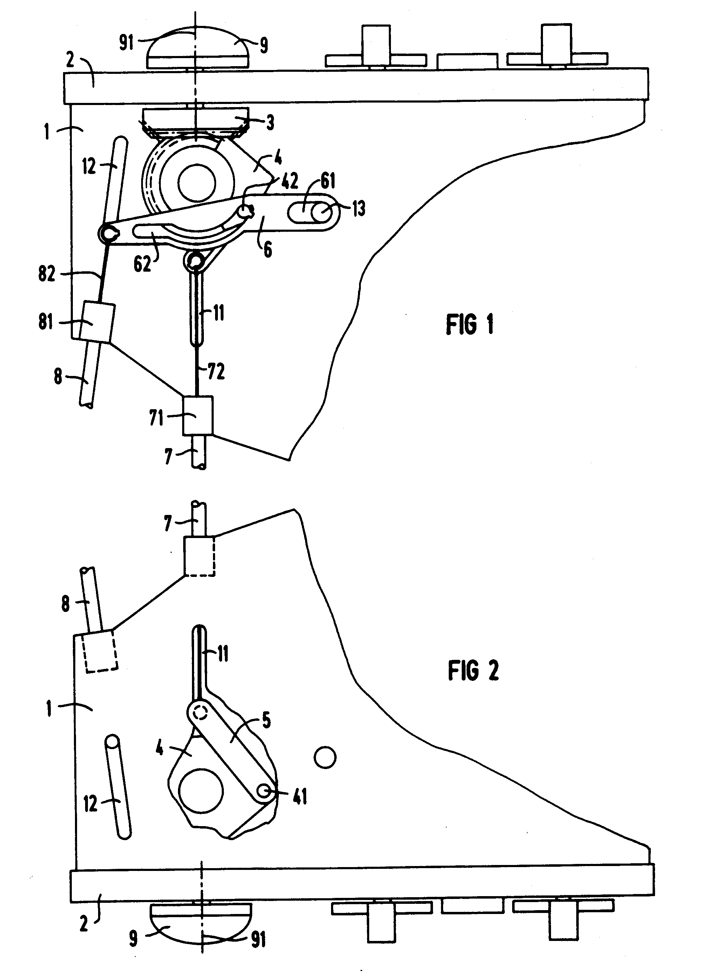

Die Figuren 1, 2 zeigen den Grundkörper 1,2 einer armaturenbrettseitigen Bedieneinheit in einem Kraftfahrzeug zum Verstellen von Luftklappen in einer Heiz- bzw. Klimaanlage. An der Frontplatte 2 des Grundkörpers 1,2 ist neben hier nicht nähere erläuterten Drehknöpfen zur Einstellung der Gebläsearehzahl eines Ventilators und der Fahrzeugtemperatur ein Drehknopf 9 für eine Luftverteilung vorgesehen. Durch Betätigung des Drehknopfes 9 werden über ein Kegelradgetriebe 3,4 mit einem antriebsseitigen, zur Achse des Drehknopfes 9 fluchtenden Drehachse 91 und einem dazu senkrecht angeordneten abtriebsseitigen Kegelrad 4 über je einen Stellhebel 5 bzw. 6 ein Bowdenzug 7 zur Betätigung von Fußraumklappen und ein Bowdenzug 8 zur Betätigung von Defrost-Luftklappen eingestellt.

Die in Bowdenzughalterungen 71 bzw. 81 aufgenommenen Bowdenzüge sind mit ihren Bowdenzugseelen 72 bzw. 82 an jeweils einem Ende des Stellhebels 5 bzw. 6 befestigt. Diese bowdenzugseitigen Enden des Stellhebels 5 bzw. des Stellhebels 6 sind in Langlöchern 11 bzw. 12 in der Grundplatte 1 des Grundkörpers 1, 2 geführt. Die Langlöcher 11 bzw. 12 verlaufen im wesentlichen geradlinig in Richtung der Bowdenzugabgänge und parallel zur Drehachse 91 des Drehknopfes 9.

Der mit seinem einen Ende den Bowdenzug 7 betätigende Stellhebei 5 ist mit seinem anderen Ende drehpunktartig an einen Mitnahmezapfen 41 des abtriebsseitigen Kegelrades 4 derart angelenkt, daß bei Drehen des Drehknopfes 9 der Mitnahmezapfen 41 in der Ebene des abtriebsseitigen Kegelrades 4 und somit der Grundplatte 1 gegebenenfalls um eine volle Umdrehung bewegt werden kann und dabei die Bowdenzugseele 72 in der Führung des Langloches 11 hin und her bewegt.

Der mit seinem einen Ende den Bowdenzug 8 betätigende Stellhebel 6 ist mit seinem anderen Ende über ein erstes Langloch 61 an einen Drehzapfen 13 angelenkt, der ortsfest in der Grundplatte 1 befestigt bzw. einstückiger Bestandteil dieser Grundplatte 1 ist. Zur Mitnahme des Stellhebels 6 bei Drehen des Drehknopfes 9 und damit des abtriebsseitigen Kegelrades 4 ist an diesem zwischen seinen beiden Enden ein Mitnahmezapfen 42 vorgesehen, der in ein zweites Langloch 62 des Stellhebels 6 eingreift, das im Zuge des Stellhebels zwischen seinem einen und seinem anderen Ende vorgesehen ist. Dieses zweite Langloch 62 weist einen eine nichtlineare Verstellcharakteristik bewirkenden Kurventeil und einen anschließenden eine lineare Verstellcharakteristik aufweisenden Kurventeil auf.

Die Erfindung ist nicht auf das vorbeschriebene Ausführungsbeispiel beschränkt. Es können z.B. anstelle eines Kegelradgetriebes mit nur zwei Kegelrädern auch mehrere Kegelräder, gegebenenfalls mit unterschiedlicher Über- bzw. Untersetzung, vorgesehen und der Drehwinkel des Drehknopfes 9 und damit der Drehbereich der Kegelräder kann über den Umfangswinkel von 360° hinausgehend oder durch Anschlagrippen begrenzt sein. Durch unterschiedliche Anordnung der Mitnahmezapfen auf dem abtriebsseitigen Kegelrad und durch einfach mögliche Änderung der als Führungsbahnen dienenden Langlöcher 11 bzw. 12 in der Grundplatte 1 kann mit geringem Aufwand der Verstellweg und der Abgangswinkel der Bowdenzüge, insbesondere des Bowdenzuges 8, verändert werden. Um eine weitgehende Unabhängigkeit der Verstellbewegungen zwischen beiden Stellhebeln erreichen zu können, ist zweckmäßigerweise der Mitnahmezapfen 41 für die Verstellübertragung auf den Bowdenzug 7 auf der Vorderseite und der Mitnahmezapfen 42 für die Verstellbewegung des Bowdenzuges 8 auf der Rückseite des abtriebsseitigen Kegelrades 4 angeordnet.

## Patentansprüche

1. Bedieneinheit zum Einstellen von Heizungs-, Klima- und/oder Lüftungsanlagen in Kraftfahrzeugen mittels zumindest eines, von einem Drehknopf (9) in einem armaturenbrettseitigen Grundkörper (1;2) über ein Kegelradgetriebe (3;4) verstellbaren Stellhebels (5 bzw. 6) für je einen Bowdenzug (7 bzw. 8) mittels einander korrespondierender Führungsmittel bzw. Mitnahmemittel (Mitnahmezapfen 41;42) am abtriebsseitigen Kegelrad (4) des Kegelradgetriebes (3;4) und am jeweiligen Stellhebel (5 bzw. 6), **dadurch gekennzeichnet,** daß die Stellhebel (5;6) an ihren einen, den jeweiligen Bowdenzug (7;8) aufnehmenden Enden in bezug auf den Grundkörper (1;2) ortsfesten Langlöchern (11 bzw. 12) geführt sind und ein Stellhebel (6) mit seinem anderen Ende über ein erstes Langloch (61 bzw. 62) an einen grundkörperseitigen Drehzapfen (13) und über ein zwischen seinen Enden liegendes zweites Langloch (62) an einen Mitnahmezapfen (42) als Mitnahmemittel des abtriebsseitigen Kegelrades (4) angelenkt ist.

2. Bedieneinheit nach Anspruch 1, **gekennzeichnet durch** jeweils im wesentlichen geradlinige, in Richtung des jeweiligen Bowdenzugabganges im Grundkörper (1;2) verlaufende Langlöcher (11 bzw. 12).

3. Bedieneinheit nach Anspruch 1 oder 2, **dadurch gekennzeichnet,** daß ein Stellhebel (5) mit seinem anderen Ende drehpunktartig an einen Mitnahmezapfen (41) des abtriebsseitigen Kegelrades (4) angelenkt ist.

4. Bedieneinheit nach einem der Ansprüche 1-3, **gekennzeichnet durch** einen kurvenartigen Verlauf des dem Mitnahmezapfen (42) zugeordneten zweiten Langloches (62).

5. Bedieneinheit nach einem der Ansprüche 1-4, **gekennzeichnet durch** eine Langlochausführung bzw. Langlochanlenkung des zweiten Langloches (62) im Sinne einer linearen und/oder nichtlinearen Einstellabhängigkeit des Bowdenzuges (8) von dem abtriebsseitigen Kegelrad (4).

6. Bedieneinheit nach einem der Ansprüche 1-5, **dadurch gekennzeichnet,** daß als Mitnahmemittel Mitnahmezapfen (41 bzw. 42) an einander gegenüberliegenden Seiten des abtriebsseitigen Kegelrades (4) angeordnet sind.

7. Bedieneinheit nach einem der Ansprüche 1-6, **dadurch gekennzeichnet,** daß die im bezug auf den Grundkörper (1;2) ortsfesten Langlöcher (11;12) in einer senkrecht zur Scheibenebene des antriebsseitigen Kegelrades (3) bzw. Frontplatte (2) des Grundkörpers (1;2) verlaufenden Grundplatte (1) vorgesehen sind.

8. Bedieneinheit nach einem der Ansprüche 1-7, **dadurch gekennzeichnet,** daß die im bezug auf den Grundkörper (1;2) ortsfesten Langlöcher (11;12) im wesentlichen geradlinig und parallel zur Drehachse (91) des antriebsseitigen Kegelrades (3) bzw. des Drehknopfes (9) verlaufen.

## Claims

1. Control unit for setting heating, air-conditioning and/or ventilating systems in motor vehicles by means of at least one adjusting lever (5 or 6) for a respective Bowden cable (7 or 8 respectively), which lever can be adjusted by a rotary knob (9) in a basic body (1; 2) on the dashboard side by way of a bevel gear unit (3; 4), by means of corresponding guiding means or carrier means (carrier pin 41; 42) on the bevel wheel (4) on the output side of the bevel gear unit (3; 4) and on the respective adjusting lever (5 or 6), characterised in that the adjusting levers (5; 6) at the one end thereof accommodating the respective Bowden cable (7; 8) are guided in slots (11 and 12 respectively) which are fixed in relation to the basic body (1; 2) and one adjusting lever (6) is linked with its other end by way of a first slot (61 or 62) to a pivot pin (13) on the basic body side and by way of a second slot (62) lying between its ends to a carrier pin (42) as a carrier of the bevel wheel (4) on the output side.

2. Control unit according to claim 1, characterised by, in each case, substantially straightlined slots (11 and 12) which extend in the direction of the exit of the respective Bowden cable in the basic body (1; 2).

3. Control unit according to claim 1 or 2, characterised in that one adjusting lever (5) is linked with its other end like a centre of rotation to a carrier pin (41) of the bevel wheel (4) on the driven side.

4. Control unit according to one of the claims 1 - 3, characterised by a curved course of the second slot (62) which is associated with the carrier pin (42).

5. Control unit according to one of the claims 1 - 4, characterised by a slotted construction or slot link of the second slot (62) for the purpose of a linear and/or non-linear setting-dependent relationship of the Bowden cable (8) with the bevel wheel (4) on the driven side.

6. Control unit according to one of the claims 1 - 5, characterised in that carrier pins (41 and 42 respectively) are arranged as carriers on opposing sides of the bevel wheel (4) on the driven side.

7. Control unit according to one of the claims 1 - 6, characterised in that the slots (11; 12) which are fixed in relation to the basic body (1; 2) are provided in a base plate (1) which extends so as to be perpendicular to the disk plane of the bevel wheel (3) on the drive side or front plate (2) of the basic body (1; 2) respectively.

8. Control unit according to one of the claims 1 - 7, characterised in that the slots (11; 12) which are fixed in relation to the basic body (1; 2) extend substantially in a straight line and parallel to the axis of rotation (91) of the bevel wheel (3) on the drive side or of the rotary knob (9) respectively.

## Revendications

1. Unité de commande pour le réglage d'installations de chauffage, de climatisation et/ou de ventilation de véhicules automobiles, au moyen d'au moins un levier (5 ou 6) de réglage affecté respectivement à une transmission à câble (7 ou 8) et susceptible d'être déplacé dans une embase (1 ; 2) du côté de la planche de bord, par un bouton tournant (9) par l'intermédiaire d'une transmission (3 ; 4) à pignon conique, grâce à des moyens de guidage, ou des moyens d'entraînement conjugués (ergot (41 ; 42) d'entraînement) situés sur le pignon conique (4) de sortie de la transmission (3 ; 4) à pignon conique, et sur le levier de réglage correspondant (5 ou 6), caractérisé en ce que les leviers de réglage (5 ; 6) sont guidés à l'une de leurs extrémités, recevant la transmission (7 ; 8) à câble respective, dans des trous oblongs (11 ou 12) fixes par rapport à l'embase (1 ; 2) et en ce qu'un levier de réglage (6) est articulé à son autre extrémité par l'intermédiaire d'un premier trou oblong (61 ou 62) sur un tourillon (13) situé du côté de l'embase et par l'intermédiaire d'un second trou oblong (62) situé entre ses extrémités sur un ergot d'entraînement (42) consistant le moyen d'entraînement du pignon conique (4) de sortie.

2. Unité de commande selon la revendication 1, caractérisé par des trous oblongs (11 ou 12) sensiblement rectilignes qui s'étendent dans l'embase dans la direction des sorties pour transmission à câble.

3. Unité de commande selon la revendication 1 ou 2, caractérisée en ce qu'un levier de réglage (5) est articulé à pivotement par son autre extrémité sur un ergot d'entraînement (41) du pignon conique (4) de sortie.

4. Unité de commande selon l'une des revendications 1 à 3, caractérisée par la forme courbe du deuxième trou oblong affecté à l'ergot d'entraînement (42).

5. Unité de commande selon l'une des revendications 1 à 4, caractérisée par un mode d'exécution ou par un mode d'articulation du second trou oblong (62) telle que le réglage de la transmission par câble (8) dépende d'une manière linéaire et/ou non linéaire du pignon conique (4) de sortie.

6. Unité de commande selon l'une des revendications 1 à 5, caractérisée en ce que des ergots d'entraînement (41 ou 42) sont disposés sur des côtés opposés du pignon conique (4) de sortie, pour servir de moyen d'entraînement.

7. Unité de commande selon l'une des revendications 1 à 6, caractérisée en ce que les trous oblongs (11 ; 12) fixes par rapport à l'embase (1 ; 2) sont prévus dans une embase (1) s'étendant perpendiculairement au plan du pignon conique (3) d'entrée et de la plaque (2) frontale de l'embase (1 ; 2).

8. Unité de commande selon l'une des revendications 1 à 7, caractérisée en ce que les trous oblongs (11 ; 12) fixes par rapport à l'embase (1 ; 2) s'étendent sensiblement de façon rectiligne et parallèlement à l'axe de rotation (91) du pignon conique (3) d'entrée ou du bouton tournant (9).
